(19) Europäisches Patentamt / European Patent Office / Office européen des brevets

(11) **EP 3 481 219 B1**

(12) **EUROPEAN PATENT SPECIFICATION**

(45) Date of publication and mention
of the grant of the patent:
**08.03.2023 Bulletin 2023/10**

(21) Application number: **17736663.0**

(22) Date of filing: **06.07.2017**

(51) International Patent Classification (IPC):
**A23J 1/14** (2006.01)     **A23P 30/40** (2016.01)
**A23G 3/34** (2006.01)

(52) Cooperative Patent Classification (CPC):
(C-Sets available)
**A23P 30/40; A23G 3/346; A23J 1/14;**
A23V 2002/00                         (Cont.)

(86) International application number:
**PCT/EP2017/066869**

(87) International publication number:
**WO 2018/007490 (11.01.2018 Gazette 2018/02)**

(54) **FOAM COMPRISING RAPESEED PROTEIN ISOLATE**

SCHAUM MIT RAPSSAMENPROTEINISOLAT

MOUSSE COMPRENANT UN ISOLAT DE PROTÉINE DE COLZA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2016 EP 16178340
19.04.2017 EP 17166990**

(43) Date of publication of application:
**15.05.2019 Bulletin 2019/20**

(73) Proprietor: **DSM IP Assets B.V.
6411 TE Heerlen (NL)**

(72) Inventors:
• **SHI, Jing
  6100 AA ECHT (NL)**
• **VAN DEN BURG, Anthonius Cornelis
  6100 AA ECHT (NL)**
• **SMOLDERS, Gerardus Johannes Franciscus
  6100 AA ECHT (NL)**

(74) Representative: **DSM Intellectual Property
P.O. Box 4
6100 AA Echt (NL)**

(56) References cited:
**DE-A1-102014 005 466     US-A1- 2007 098 876**

• **FRANK PUDEL ET AL: "Production and
  properties of rapeseed albumin", LIPID
  TECHNOLOGY, vol. 27, no. 5, 1 May 2015
  (2015-05-01), pages 112-114, XP055304331, GB
  ISSN: 0956-666X, DOI: 10.1002/lite.201500023**
• **J. KROLL: "Selected functional properties of
  detoxified rapeseed protein preparations
  effected by phytic acid", NAHRUNG - FOOD, vol.
  35, no. 6, 1 January 1991 (1991-01-01), pages
  619-624, XP055304339, XX ISSN: 0027-769X, DOI:
  10.1002/food.19910350610**
• **L. P. Kodagoda ET AL: "Some Functional
  Properties of Rapeseed Protein Isolates and
  Concentrates", Can. Inst. Food Sci. Technol. J.,
  1 January 1973 (1973-01-01), pages 266-269,
  XP055304436, Retrieved from the Internet:
  URL:http://www.sciencedirect.com/science/a
  rticle/pii/S0315546373740384 [retrieved on
  2016-09-21]**
• **C.V. MORR ET AL: "A Collaborative Study to
  Develop a Standardized Food Protein Solubility
  Procedure", JOURNAL OF FOOD SCIENCE, vol.
  50, no. 6, 1 November 1985 (1985-11-01), pages
  1715-1718, XP055170902, ISSN: 0022-1147, DOI:
  10.1111/j.1365-2621.1985.tb10572.x**

EP 3 481 219 B1

- **J. KROLL ET AL: "Beeinflussung funktioneller Eigenschaften von Proteinen durch gekoppelte mechanolytische und chemische Modifizierung", NAHRUNG/FOOD, vol. 28, no. 4, 1 January 1984 (1984-01-01), pages 389-396, XP55200521, ISSN: 0027-769X, DOI: 10.1002/food.19840280414**

(52) Cooperative Patent Classification (CPC): (Cont.)

C-Sets
**A23G 3/346, A23G 2220/02;**
A23V 2002/00, A23V 2200/226, A23V 2250/5428,
A23V 2250/548

**Description**

**Field of the invention**

The present invention is directed to a foam comprising rapeseed protein isolate and water and a process for making the foam. Also disclosed are the use of the foam in food products.

**Background of the invention**

Foam is defined as air bubbles trapped in for example a liquid. A foam is created by incorporating air, usually by beating the liquid, and capturing the air in tiny bubbles. Eggs and in particular egg white are excellent at foam formation.

Egg whites are about 90% water. The other 10% is primarily proteins, with a few vitamins, minerals and glucose mixed in.

Egg white, when beaten becomes foamy, increases 6 to 8 times in volume and stands in peaks. On heating the foam, the air cells expand and the egg protein coagulates around them, giving permanence to the foam. Egg white foam is responsible for the structure of angel food cake, meringues, puffy omelets and soufflés. It is known that the presence of fat inhibits the foaming of egg whites. Furthermore, adding an acid ingredient may help to stabilize egg white foam. The most commonly used acid ingredient is cream of tartar although some recipes call for lemon juice or vinegar. For under-beaten egg whites, the volume of the finished product will be less than desired. Over-beaten whites form clumps which are difficult to blend with other ingredients. Because over-beaten egg whites also lack elasticity, they cannot expand properly when heated. The finished product may be dry or have poor volume, or may even collapse.

The whipping action denatures (unfolds) the proteins and incorporates air into the whites. Denaturing the proteins exposes hydrophilic (water loving) and hydrophobic (water fearing) sections. The hydrophobic parts of proteins orient themselves around the incorporated air. This forms a protective lining around the air bubbles so they don't coagulate. A foam gets stiffer the longer it is whipped, unless it is over-beaten. As time progresses, air bubbles are divided into smaller, more numerous bubbles. Depending on how long the egg whites are beaten, a foam can be classified as soft, firm, or stiff.

Sugar thickens the egg white mixture. This increases the time it takes to foam because the mix does not spread into thin walls around bubbles easily. But sugar does add stability to the foam. It makes for a less delicate foam and keeps water from draining out during heating. For these reasons sugar is often added after a foam has been created.

Salt increases the whipping time and decreases the stability of the foam. This is because salt dissolves into positive and negative ions. These ions bond with proteins, which disrupts the foam from forming. To protect the foam, salt is normally added after the whites have been beaten to the foamy stage.

Acids (vinegar, lemon juice, cream of tartar, etc.) are also added after the foamy stage has been reached because they delay foam formation. Acids are useful because they stabilize the foam. Acids decrease the pH, which reduces the ability of the proteins to coagulate.

However, the use of egg protein is often undesirable. For example, due to problems with egg allergies, medical problems associated with cholesterol levels in eggs, religious restrictions/convictions, culinary preferences (such as, for example, a vegetarian or a vegan diet), cost fluctuations in the price of eggs, use of antibiotics and hormones in poultry production, and diseases associated with poultry (such as, for example, bird flu), the use of alternative proteins may be desired.

The use of vegetable based proteins as an alternative protein is known, for example WO 2008/094434 discloses the use of wheat protein isolates as an alternative to the use of egg yolk protein in compositions. However, the use of wheat protein isolates may not be desirable for those with gluten allergies and there may also be intolerances to soy based proteins and egg white based proteins.

There is therefore a need to find to find a suitable vegetable based protein that can be used to replace egg white and yet maintain the required texture, flavor and stability. Soy protein is widely used however in view of some intolerances to soy products there is a need to find other sources of vegetable proteins.

Suitable alternatives include pea protein and rapeseed protein. Rapeseed seeds are rich in oil and contain considerable amounts of protein that accounts for 17 to 25% of seed dry weight. Processing rapeseed for oil for human consumption produces rapeseed meal (60%) as a by-product which contains about 30 to 40% protein. The rapeseed used for this purpose is usually of the varieties *Brassica napus* and *Brassica juncea.* These varieties contain only low levels of erucic acid and glucosinolate, and are also known as canola. Canola is a contraction of Canada and ola, for "oil low acid", but is now a generic term defined as rapeseed oil comprising < 2% erucic acid and < 30 mmol/g glucosinolate. The resultant rapeseed meal is currently used as a high-protein animal feed.

Proteins are available as hydrolysates, concentrates and isolates. Hydrolysates are proteins that have been partially broken down by exposing the protein to heat, acid or enzymes that break apart the bonds linking amino acids. This makes it taste more bitter, but also allows it to be absorbed more rapidly during digestion than a native (non-hydrolyzed) protein. Rapeseed protein isolates (RPI) are more pure than concentrates, meaning other non-protein components have been partially removed to "isolate" the protein. Many concentrates are around 80% protein, which means that on a dry basis, 80% of the total weight is protein. Isolates are typically around 90% protein (dry basis). This is calculated using the Kjeldahl method. The predominant storage proteins found in rapeseed are cruciferins and napins.

Cruciferins are globulins and are the major storage protein in the seed. It is composed of 6 subunits and has a total molecular weight of approximately 300 kDa. Napins are albumins and are a low molecular weight storage protein with a molecular weight of approximately 14 kDa.

Rapeseed proteins can also be divided into various fractions according to the corresponding sedimentation coefficient in Svedberg units (S). This coefficient indicates the speed of sedimentation of a macromolecule in a centrifugal field. For rapeseed proteins, the main reported fractions are 12S, 7S and 2S. Cruciferin and napin are the two major families of storage proteins found in canola/rapeseed. Napin is a 2S albumin, and cruciferin is a 12S globulin. Furthermore, Schwenke and Linow (Nahrung (1982) 26, K5-K6) state that reversible dissociation of the 12S globulin from rapeseed (*Brassica napus L.*) depends on ionic strength. The cruciferin complex is present as a 300 kDa 12S hexamer when exposed to higher ionic strength ($\mu \geq 0.5$ mS/cm), and reversibly dissociates into 7S trimeric molecules of 150 kDa when exposed to low ionic strength conditions.

Napins are more easily solubilized and in for example EP 1715752B1 a process is disclosed to separate out the more soluble napin fraction, preferably to at least 85 wt.%. Napins are primarily proposed for use used in applications where solubility is key. In US 2007/0098876 a rapeseed protein isolate is disclosed having a protein content of at least 90 wt.% and exhibiting a protein profile which is 60 to 95 wt.% of 2S proteins (napins) and about 5 to 40 wt.% of 7S. DE 10 2014 005466 A1 also describes a process for obtaining purified cruciferin and napin fractions. During the process, also a protein mixture of the two with 55-60% napins and 40-45% cruciferins is obtained. The solubility of this protein mixture is approximately 75%.

Addition of rapeseed protein isolates to egg white in whipping applications was first suggested by Kodagoda et al. (Can. Inst. Food Sci. Technol. J. (1973) 6, 266-269). However, the suggested amounts of rapeseed protein isolates (3%) are only small compared to the bulk of the egg white, which hardly qualifies as a significant alternative for the use of egg white. Moreover, the results were unfavorable as a decreased specific volume was observed. Only in one case an improved specific volume was observed, however this required the rapeseed protein isolate to be obtained using a specific HCl extraction process, on top of the already complex three stage extraction process of Kodagoda et al. (Can. Inst. Food Sci. Technol. J. (1973) 6, 135-141) used to prepare the rapeseed protein isolates.

EP 1389921B1 discloses a process of forming a food composition, which comprises extracting rapeseed oil seed meal with an aqueous food-grade salt solution at a temperature of at least 5°C to cause solubilizing of protein in the rapeseed oil seed meal and to form an aqueous protein solution having a protein content of 5 to 30 g/l and a pH of 5 to 6.8, and subsequently the protein is extracted via micelles/fractionating. This is done to improve solubility as the 12S fraction is usually considered as less soluble in the presence of low salt levels and over wide pH ranges. The resultant rapeseed protein isolate is incorporated in said food composition in substitution for egg white, milk protein, whole egg, meat fibers, or gelatin, however not in foams. In Pudel et al. (Lipid Technology (2015) 27, 112-114) a process is disclosed for separating a rapeseed protein isolate into pure (>95%) cruciferin and pure (>98%) napin. Following this complex purification procedure, a remainder of a protein mixture is obtained comprising 43-44% cruciferin and 56-57% napin. The solubility of this mixture is relatively low with 75% at pH 7 measured according to Morr et al. (J. Food Sci. (1985) 50, 1715-1718). All purified fractions as such are whipped to a foam from a highly diluted (3%) solution, however not in combination with egg white. Although US 2007/0098876 reports the preparation of foams from a 5% rapeseed protein solution, the suggestion of to go to slightly higher concentrations is only made for compositions comprising both high amounts of soluble 2S proteins (60 to 95 wt.%) and of 2S proteins (napins) and dissociated cruciferins, 7S proteins (5 to 40 wt.%).

There remains a need for processes that are less complex and have higher yields and still yield rapeseed protein isolates that perform well as (partial) replacement for egg protein.

It has been found that the more elaborate processes as advocated in the abovementioned prior art are not necessary. The rapeseed protein isolate used in the present invention is obtained by a process without the need to separate out the protein constituents and yet a solubility across a broader pH range can be maintained, a solubility that is even higher than reported in the prior art. As a result, the process used to prepare rapeseed protein isolate as starting material for the present invention is more economically viable than prior art processes.

It has been found that the resulting high purity rapeseed protein isolate has broadly based functionality in food products, unique among proteinaceous materials. The ability to utilize a protein which is vegetable in origin in food products enables truly vegetarian food products to be provided in instances where egg white and/or animal-derived protein have been used in the absence of any available substitute.

It has been found that the rapeseed protein isolate may be used in conventional applications of protein isolates, such as protein fortification of processed foods, emulsification of oils, body formers in baked foods and foaming agents in products which entrap gases. The rapeseed protein isolate also has functionalities not exhibited by the source material and isoelectric precipitates. The rapeseed protein isolate has certain functionalities including the ability to be formed into protein fibers and the ability to be used as an egg white substitute or extender in food products where egg white is used as a binder. As described herein, the rapeseed protein isolate provided herein has other functionalities.

It has therefore been found that the use of soluble native rapeseed protein isolate comprising both cruciferins and napins, obtained from cold pressed oilseed meal and extracted under mild conditions gave surprisingly good results when used to fully or partially replace egg white in foams.

## Detailed description of the invention

In a first aspect according to the present invention there is provided a foam comprising:

i) at least 80 wt.% of water, and
ii) at least 5 wt.% native rapeseed protein isolate comprising 40 to 65 wt.% cruciferins and 35 to 60 wt.% napins and having a solubility of at least 88% over a pH range from 3 to 10 at a temperature of $23\pm2°C$,
iii) egg white protein, isolates and/or concentrates thereof,

wherein i) + ii) + iii) add up to 100 wt.% or less, wherein the native rapeseed protein isolate has a phytate level less than 0.4 wt.%.

In one embodiment it was found that optimal results in terms of solubility and foaming capacity were obtained when the wt.% of cruciferins and napins are approximately equal. Hence, preferably 42 to 60 wt.% cruciferins and 40 to 58 wt.% napins, more preferably 45 to 60 wt.% cruciferins and 40 to 55 wt.% napins, most preferably 47 to 55 wt.% cruciferins and 45 to 53 wt.% napins. With the proviso that the combined wt.% of both cruciferin and napin do not exceed 100%.

The native rapeseed protein isolate has a solubility of at least 88%, more preferably at least 90%, more preferably at least 92%, still more preferably of at least 94% and still more preferably of at least 96% when measured over a pH range from 3 to 10 at a temperature of $23\pm2°C$. This is also known as the soluble solids index (SSI), as described by Morr et al. (J. Food Sci. (1985) 50, 1715-1718) and modified as per the 'Test Method' section of the instant invention.

For use in human food consumption the native rapeseed protein isolate preferably comprises a low level of salt. This is measured by the conductivity. Preferably the conductivity of the native rapeseed protein isolate in a 2 wt.% aqueous solution is less than 9000 $\mu$S/cm over a pH range of 2 to 12. More preferably the conductivity of the native rapeseed protein isolate in a 2 wt.% aqueous solution is less than 4000 $\mu$S/cm over a pH range of 2.5 to 11.5. For comparison, the conductivity of a 5g/l aqueous sodium chloride solution is around 9400 $\mu$S/cm.

The native rapeseed protein isolate has a phytate level of less than 0.4 wt.%, more preferably less than 0.25 wt.% and most preferably less than 0.15 wt.%. Addition of phytate to rapeseed protein isolates was observed to have negative effects on solubility and foaming properties as reported by Kroll (Die Nahrung (1991) 35, 619-624).

Preferably the native rapeseed protein isolate has a protein content of at least 90 wt.% (calculated as Kjeldahl N $\times$ 6.25) on a dry weight basis, more preferably at least 94 wt.%, most preferably at least 96 wt.% and especially at least 98 wt.%.

The water (i) should be water suitable for human consumption.

The foam comprises, in addition to the rapeseed protein isolate (ii) (iii) egg white protein, isolates thereof, concentrates thereof, and combinations of any thereof.

Preferably the total protein used (ii) + (iii) comprises at least 25%, more preferably at least 40% and most preferably at least 60% of rapeseed protein isolate.

Surprisingly it was found that a combination of approximately equal amounts of egg white protein and rapeseed protein resulted in a more stable foam than the use of either alone, indicating a synergistic effect. Therefore, the a foam according to the invention comprises rapeseed protein isolate and egg white protein in a ratio in the range of from 25:75 to 75:25, more preferably of from 35:65 to 65:35, most preferably of from 45:55 to 55:45. The resultant combination has a foaming stability higher by 20% than the average of the foaming stability using only rapeseed protein isolate or only egg white protein.

The foam of the present disclosure may further comprise other ingredients, such as, for example, food starches, sweeteners, spices, seasonings (including salt), food pieces, stabilizers, antioxidants, sterols, soluble fiber, gums, flavorings, preservatives, colorants, and various combinations of any thereof. The foam may be prepared using processes well known in the art.

The rapeseed protein isolate is produced from rapeseed press meal (also referred to as cake), the by-product of rapeseed oil production. Preferably the native rapeseed protein isolate is substantially un-hydrolyzed. By substantially un-hydrolyzed is meant that the protein is not deliberately hydrolyzed. Preferably the rapeseed protein isolate is obtained in a process where the levels of napin and cruciferin are kept substantially constant (i.e. neither the napin or cruciferin levels are deliberately increased). Preferably the rapeseed protein isolate is obtained in a process without a fractionating step.

The process starts with an extraction step, in which rapeseed meal (preferably cold-pressed rapeseed oil seed meal) is mixed with an aqueous salt solution, for example 0 to 5% sodium chloride, at a temperature between 4 to 75°C, more preferably 20 to 75°C and most preferably 40 to 75°C. Preferably the meal to water ratio is in the range of from 1:5 to 1:20. After a period in the range of from 5 min to 2 hours, preferably 30 minutes to 1 hour, the protein rich solution (extract) is separated from the insoluble material. The protein rich solution is hereafter referred to as the extract. The pH of the extract is adjusted and the extract is further processed to clarify the material and remove non-protein substances. The residual fat and formed precipitates are removed via a solid/liquid separation step (*e.g.* a membrane filter press or centrifugation). The extract is then concentrated and washed in an ultrafiltration/diafiltration (UF/DF) step. The UF/DF step has the purpose of concentrating the protein and removing anti-nutritional factors (*e.g.* polyphenols, residual phytate, glucosinolates). Finally, the washed concentrate may be dried in a suitable dryer, such as a spray drier (single or multistage) with an inlet temperature in the range of from 150 to 200°C and an outlet temperature in the range of from 50 to 100°C resulting in the rapeseed protein isolate.

In a second aspect of the present invention there is provided a process for obtaining a foam comprising:

 i) at least 80 wt.% of water, and
 ii) at least 5 wt.% native rapeseed protein isolate comprising 40 to 65 wt.% cruciferins and 35 to 60 wt.% napins and having a solubility of at least 88% over a pH range from 3 to 10 at a temperature of $23 \pm 2$°C,
 iii) egg white protein, isolates and/or concentrates thereof, wherein i) + ii) + iii) add up to 100 wt.% or less, wherein the native rapeseed protein isolate has a phytate level less than 0.4 wt.%, comprising:

  a) mixing the rapeseed protein isolate with water to form a paste:
  b) adding water to the paste obtained in step a);
  c) adding before, after or during step b) egg white protein, isolates thereof, and/or concentrates thereof,
  d) whipping the mixture obtained in step c) into a foam.

In another embodiment the pH of the mixture mentioned under c) above is adjusted to neutral, *i.e.* to pH $7.0 \pm 1.0$, preferably to pH $7.0 \pm 0.5$, most preferably to pH $7.0 \pm 0.3$ by the addition of acid or base, as the case may be.

In a third aspect according to the invention there is also provided the use of a foam according to the invention in food products.

Hence, the foaming properties of egg white and milk protein to provide a suitable aerated structure, used in such products as nougats, macaroons and meringues, may be reproduced by utilization of the rapeseed protein isolate.

Accordingly, the use results in a food product comprising a foam according to the first aspect of the invention as defined in the appended claims.

Non-limiting Examples and comparative examples of the invention are described below.

## EXAMPLES

### Test methods

#### Protein content

Protein content was determined by the Kjeldahl method according to AOAC Official Method 991.20 Nitrogen (Total) in Milk, using a conversion factor of 6.25 was used to determine the amount of protein (% (w/w)).

#### Conductivity

The conductivity of native rapeseed protein isolate in a 2 wt.% aqueous solution was measured using a conductivity meter: Hach sensION+ EC71.

#### Solubility test

The below solubility test is adapted from Morr et al. (J. Food Sci. (1985) 50, 1715-1718), the difference being the use of water instead of 0.1M sodium chloride.

Sufficient protein powder to supply 0.8 g of protein was weighed into a beaker. A small amount of demineralized water was added to the powder and the mixture was stirred until a smooth paste was formed. Additional demineralized water was then added to make a total weight of 40 g (yielding a 2% w/w protein dispersion). The dispersion was slowly stirred for at least 30 min using a magnetic stirrer. Afterwards the pH was determined and adjusted to the desired level (2, 3, etc.) with sodium hydroxide or hydrochloric acid. The pH of the dispersion was measured and corrected periodically during 60 minutes stirring. After 60 minutes of stirring, an aliquot of the protein dispersion was reserved for protein content determination (Kjeldahl analysis). Another portion of the sample was centrifuged at 20,000 G for 2 minutes. The supernatant and pellet were separated after centrifugation. The protein content of the supernatant was also determined by Kjeldahl analysis.

$$\text{Protein solubility (\%)} = (\text{protein in supernatant} / \text{protein in total dispersion}) \times 100.$$

Alternative methods for determining solubility are available and in some case use buffers, like borate-phosphate buffer in WO 2011/057408. However, such as values are incomparable with the ones obtained in the instant application that are determined in the absence of buffer.

**Comparative Example 1**

**Egg white foam**

In this example a typical egg white foam was prepared. Foam capacity and stability were measured. All ingredients were at ambient temperature ($23\pm2°C$) and quantities are shown in Table 1 below. Sufficient egg white protein (EWP, available from Sanovo) to supply 11.69 g of protein was weighed into a 250 $cm^3$ beaker. A small amount of tap water was added to the powder and the mixture was stirred until a smooth paste formed. Additional tap water was then added to make a total weight of 125 g (yielding a 9.35% protein mixture). The mixture was slowly stirred for at least 30 min using a magnetic stirrer. Afterwards the pH was determined, and adjusted to neutral (-pH 7) with sodium hydroxide or hydrochloric acid. The pH of the mixture was corrected periodically to ~pH 7 during 60 minutes of stirring. Protein mixture (100 $cm^3$) was measured (both the volume and weight were noted) and transferred into a mixer bowl of the Hobart mixer and was whipped at 450 rpm for 150 seconds. After whipping, the foam surface was smoothed in the mixer bowl. The height of the foam was measured three times by a dipstick pin. The foam volume was calculated by means of a conversion of the foam height (mm) to volume ($cm^3$). All the foam was transferred from the mixer bowl into a funnel (with perforated insert bottom plate), which was fixed in a tripod. A 50 $cm^3$ graduated glass cylinder was placed below the funnel, and the amount of liquid draining from the foam was monitored for 60 minutes (the 60 minutes countdown was started as soon as the whipping was stopped).

- Foam capacity (%) = $(V_f/Vl_0) \times 100\%$, in which $V_f$ = foam volume ($cm^3$) and $Vl_0$ = liquid volume at time t = 0 (100 $cm^3$).
- Foam stability (%) = $((Vl_0 - Vl_t)/Vl_0) \times 100\%$, in which $Vl_0$ = start liquid volume at time t = 0 (100 $cm^3$); Vlt = drain liquid volume after t = 60 min ($cm^3$).

The resultant foam had a capacity of 1463% and stability of 70 to 75%.

Table 1

| Ingredient | Dosage | Protein concentration in final mixture |
|---|---|---|
| EWP (85% protein content) | 13.75 g | 9.35% |
| Water | 111.25 g | |

**Comparative Example 2**

**Classic rapeseed protein isolate (RPI) foam**

Comparative example 1 was repeated but with a classic rapeseed protein isolate (RPI) available from DSM with a solubility less than 90% across a pH range of 3 to 8 and less than 70% across a pH range of 4 to 6 (i.e. not according to the invention) instead of egg white protein using the quantities described in Table 2 below. The resultant foam had a capacity of 2278% and stability of 55%.

Table 2

| Ingredient | Dosage | Protein concentration in final mixture |
|---|---|---|
| Classic RPI | 13.0 g | 9.35% |

(continued)

| Ingredient | Dosage | Protein concentration in final mixture |
|---|---|---|
| Water | 112 g | |

## Comparative Example 3

### Classic RPI plus egg white foam

Comparative example 1 was repeated but with 50% classic RPI (*i.e.* not according to the invention) and 50% EWP using the quantities described in Table 3 below. The resultant foam had a capacity of 974%, and stability of 40%. The mixture of classic RPI and EWP gave a reduced foam capacity as well as reduced foam stability.

Table 3

| Ingredient | Dosage | Protein concentration in final mixture |
|---|---|---|
| Classic RPI | 6.5 g | 4.67% |
| EWP (85% protein content) | 6.9 g | 4.67% |
| Water | 111.6 g | |

## Comparative Example 4

### Preparation of rapeseed protein isolate (RPI90)

The rapeseed protein isolate was produced from cold-pressed rapeseed oil seed meal having an oil content of less than 15% on dry matter basis, cleaned and processed below 75°C.

In the extraction step, the cold-pressed rapeseed oil seed meal was mixed with an aqueous salt solution (1 to 5% sodium chloride), at a temperature between 40 to 75°C. The meal to aqueous salt solution ratio was in the range of from 1:5 to 1:20. After about 30 minutes to 1 hour the protein rich solution (extract) was separated from the insoluble material. The pH of the extract was adjusted to neutral and the extract was further processed to clarify the material and remove non-protein substances.

In the decreaming step, the residual fat was removed via a liquid/liquid separation step using centrifugation. Non-protein substances were removed by adjusting the pH of the material to neutral in the presence of a salt with which phytate precipitates (*e.g.* calcium chloride). The formed precipitate is removed via a solid/liquid separation step (*e.g.* a membrane filter press or centrifugation) in which the impurities are removed in a solid salt form (*e.g.* calcium phytate). The extract was then concentrated and washed in an ultrafiltration/diafiltration (UF/DF) step. Finally, the washed concentrate was dried in a spray drier with an inlet temperature in the range of from 150 to 200°C and an outlet temperature in the range of from 50 to 100°C resulting in the rapeseed protein isolate. Several batches were prepared and tested.

The conductivity of the resultant native rapeseed protein isolates in a 2% solution was less than 4000 $\mu$S/cm over a pH range of 2.5 to 11.5.

The resultant native rapeseed protein isolate comprised in the range of from 40 to 65% cruciferins and 35 to 60% napins.

The resultant native rapeseed protein isolate contained less than 0.26 wt.% phytate.

The resultant native rapeseed protein isolates had a solubility of at least 88% when measured over a pH range from 3 to 10 at a temperature of 23±2°C as shown for two batches in Table 4.

Table 4

| pH | 3 | 4 | 5 | 6 | 7 | 8 | 9 | 10 |
|---|---|---|---|---|---|---|---|---|
| Sample 1 Solubility (%) | 98 | 96 | 89 | 95 | 95 | 97 | 97 | 98 |
| Sample 2 Solubility (%) | 102.5 | 97.5 | 94.3 | 93.9 | 97.0 | 93.0 | 94.0 | 99.8 |

**Comparative Example 5**

**Soluble RPI90 foam**

Comparative example 1 was repeated but with a native RPI according to the invention (RPI90 available from DSM) comprising 40 to 65 wt.% cruciferins and 35 to 60 wt.% napins and having a solubility of at least 90% over a pH range from 3 to 10 at a temperature of $23\pm2°C$, and a conductivity in a 2 wt.% aqueous solution of less than 9000 $\mu$S/cm over a pH range of 2 to 12; instead of egg white protein, using the quantities described in Table 5 below. The resultant foam had a capacity of 2930% and stability of 70%.

Table 5

| Ingredient | Dosage | Protein concentration in final mixture |
|---|---|---|
| RPI90 | 13 g | 9.35% |
| Water | 112 g | |

**Example 1**

**Soluble RPI90 plus egg white foam**

Comparative example 1 was repeated but with 50% RPI90 and 50% EWP using the quantities described in Table 6 below. The resultant foam had a capacity of 2376%, and stability of 89%. The mixture of RPI90 and EWP didn't destroy foaming capacity. The foaming stability (89%) was higher than that stabilized by RPI90 (70%) or EWP (70 to 75%) alone, therefore demonstrating a synergistic effect.

Table 6

| Ingredient | Dosage | Protein concentration in final mixture |
|---|---|---|
| RPI90 | 6.5 g | 4.67% |
| EWP (85% protein content) | 6.9 g | 4.67% |
| Water | 111.6 g | |

**Claims**

1. A foam comprising:

     i) at least 80 wt.% of water, and
     ii) at least 5 wt.% native rapeseed protein isolate comprising 40 to 65 wt.% cruciferins and 35 to 60 wt.% napins and having a solubility of at least 88% over a pH range from 3 to 10 at a temperature of $23\pm2°C$,
     iii) egg white protein, isolates thereof, and/or concentrates thereof,

   wherein i) + ii) + iii) add up to 100 wt.% or less, and wherein said rapeseed protein isolate and said egg white protein occur in a ratio in the range of from 25:75 to 75:25, wherein the native rapeseed protein isolate has a phytate level less than 0.4 wt.%.

2. A foam according to claim 1 wherein the native rapeseed protein isolate has a protein content of at least 90 wt.% on a dry weight basis and a solubility of at least 90% over a pH range from 3 to 10 at a temperature of $23\pm2°C$.

3. A foam according to any one of the preceding claims wherein the native rapeseed protein isolate in an aqueous 2 wt.% solution has a conductivity of less than 9000 $\mu$S/cm over a pH range of 2 to 12 measured using a Hach sensION+ EC71 conductivity meter.

4. A process for obtaining a foam comprising:

     i) at least 80 wt.% of water, and

ii) at least 5 wt.% of native rapeseed protein isolate comprising 40 to 65 wt.% cruciferins and 35 to 60 wt.% napins and having a solubility of at least 88% over a pH range from 3 to 10 at a temperature of 23±2°C,
iii) egg white protein, isolates thereof, and/or concentrates thereof,

wherein i) + ii) + iii) add up to 100 wt.% or less and wherein said rapeseed protein isolate and said egg white protein occur in a ratio in the range of from 25:75 to 75:25, wherein the native rapeseed protein isolate has a phytate level less than 0.4 wt.% comprising:

a) mixing the rapeseed protein isolate with water to form a paste;
b) adding water to the paste obtained in step a);
c) adding before, after or during step b) egg white protein, isolates thereof, and/or concentrates thereof,
d) whipping the mixture obtained in step c) into a foam.

**5.** A process according to claim 4 wherein after step c) the pH is adjusted to neutral.

**6.** Use of a foam according to anyone of claims 1 to 3 in a food product.

**Patentansprüche**

**1.** Schaum, umfassend:

i) mindestens 80 Gew.-% Wasser und
ii) mindestens 5 Gew.-% natives Rapssamenproteinisolat, das 40 bis 65 Gew.% Cruciferine und 35 bis 60 Gew.% Napine umfasst und eine Löslichkeit von mindestens 88 % über einen pH-Wert-Bereich von 3 bis 10 bei einer Temperatur von 23 ± 2 °C aufweist,
iii) Eiweißprotein, Isolate davon und/oder Konzentrate davon,

wobei i) + ii) + iii) in der Summe 100 Gew.% oder weniger ergeben und wobei das Rapssamenproteinisolat und das Eiweißprotein in einem Verhältnis im Bereich von 25:75 bis 75:25 vorliegen, wobei das native Rapssamenproteinisolat ein Phytatniveau von weniger als 0,4 Gew.% aufweist.

**2.** Schaum nach Anspruch 1, wobei das native Rapsproteinisolat einen Proteingehalt von mindestens 90 Gew.% auf Trockengewichtsbasis und eine Löslichkeit von mindestens 90 % über einen pH-Wert-Bereich von 3 bis 10 bei einer Temperatur von 23 ± 2 °C aufweist.

**3.** Schaum nach einem der vorhergehenden Ansprüche, wobei das native Rapssamenproteinisolat in einer wässrigen 2 gew.-%igen Lösung eine Leitfähigkeit von weniger als 9000 μS/cm über einen pH-Wert-Bereich von 2 bis 12 aufweist, gemessen mit einem Hach sensION+ EC71 Leitfähigkeitsmessgerät.

**4.** Verfahren zum Erhalten eines Schaums, umfassend:

i) mindestens 80 Gew.-% Wasser und
ii) mindestens 5 Gew.-% natives Rapssamenproteinisolat, das 40 bis 65 Gew.% Cruciferine und 35 bis 60 Gew.% Napine umfasst und eine Löslichkeit von mindestens 88 % über einen pH-Wert-Bereich von 3 bis 10 bei einer Temperatur von 23 ± 2 °C aufweist,
iii) Eiweißprotein, Isolate davon und/oder Konzentrate davon,

wobei i) + ii) + iii) in der Summe 100 Gew.% oder weniger ergeben und wobei das Rapssamenproteinisolat und das Eiweißprotein in einem Verhältnis im Bereich von 25:75 bis 75:25 vorliegen, wobei das native Rapssamenproteinisolat ein Phytatniveau von weniger als 0,4 Gew.% aufweist, umfassend:

a) Mischen des Rapssamenproteinisolats mit Wasser, um eine Paste zu bilden;
b) Zugeben von Wasser zu der in Schritt a) erhaltenen Paste;
c) Zugeben von Eiweißprotein, Isolaten davon und/oder Konzentraten davon vor, nach oder während Schritt b),
d) Aufschlagen der in Schritt c) erhaltenen Mischung zu einem Schaum.

**5.** Verfahren nach Anspruch 4, wobei der pH-Wert nach Schritt c) auf neutral eingestellt wird.

**6.** Verwendung eines Schaums nach einem der Ansprüche 1 bis 3 in einem Nahrungsmittelprodukt.

**Revendications**

**1.** Mousse comprenant :

i) au moins 80 % en poids d'eau, et
ii) au moins 5 % en poids d'isolat de protéines de colza natif comprenant 40 à 65 % en poids de cruciférines et 35 à 60 % en poids de napines et ayant une solubilité d'au moins 88 % dans une plage de pH de 3 à 10 à une température de 2312 °C,
iii) de la protéine de blanc d'oeuf, des isolats de celle-ci, et/ou des concentrés de celle-ci,

dans laquelle la somme de i) + ii) + iii) est de jusqu'à 100 % en poids ou moins, et dans laquelle ledit isolat de protéines de colza et ladite protéine de blanc d'oeuf sont présentes dans un rapport dans la plage de 25:75 à 75:25, dans laquelle l'isolat de protéines de colza natif a un taux de phytate inférieur à 0,4 % en poids.

**2.** Mousse selon la revendication 1 dans laquelle l'isolat de protéines de colza natif a une teneur en protéines d'au moins 90 % en poids sur la base du poids sec et une solubilité d'au moins 90 % dans une plage de pH de 3 à 10 à une température de 2312 °C.

**3.** Mousse selon l'une quelconque des revendications précédentes dans laquelle l'isolat de protéines de colza natif dans une solution aqueuse à 2 % en poids a une conductivité inférieure 9000 μS/cm dans une plage de pH de 2 à 12 mesurée au moyen d'un conductimètre Hach sensION+ EC71.

**4.** Procédé d'obtention d'une mousse comprenant :

i) au moins 80 % en poids d'eau, et
ii) au moins 5 % en poids d'isolat de protéines de colza natif comprenant 40 à 65 % en poids de cruciférines et 35 à 60 % en poids de napines et ayant une solubilité d'au moins 88 % dans une plage de pH de 3 à 10 à une température de 2312 °C,
iii) de la protéine de blanc d'oeuf, des isolats de celle-ci, et/ou des concentrés de celle-ci,
dans laquelle la somme de i) + ii) + iii) est de jusqu'à 100 % en poids ou moins, et dans laquelle ledit isolat de protéines de colza et ladite protéine de blanc d'oeuf sont présentes dans un rapport dans la plage de 25:75 à 75:25, dans lequel
l'isolat de protéines de colza natif a un taux de phytate inférieur à 0,4 % en poids comprenant :

a) le mélange de l'isolat de protéines de colza avec de l'eau pour former une pâte ;
b) l'ajout d'eau à la pâte obtenue dans l'étape a) ;
c) l'ajout, avant, après ou pendant l'étape b), de protéine de blanc d'oeuf, d'isolats de celle-ci, et/ou de concentrés de celle-ci,
d) le fouettage du mélange obtenu dans l'étape c) pour obtenir une mousse.

**5.** Procédé selon la revendication 4 dans lequel, après l'étape c), le pH est ajusté à la neutralité.

**6.** Utilisation d'une mousse selon l'une quelconque des revendications 1 à 3 dans un produit alimentaire.

REFERENCES CITED IN THE DESCRIPTION

**Patent documents cited in the description**

- WO 2008094434 A
- EP 1715752 B1
- US 20070098876 A
- DE 102014005466 A1
- EP 1389921 B1
- WO 2011057408 A

**Non-patent literature cited in the description**

- **SCHWENKE ; LINOW.** *Nahrung,* 1982, vol. 26, K5-K6
- **KODAGODA et al.** *Can. Inst. Food Sci. Technol. J.,* 1973, vol. 6, 266-269
- **KODAGODA et al.** *Can. Inst. Food Sci. Technol. J.,* 1973, vol. 6, 135-141
- **PUDEL et al.** *Lipid Technology,* 2015, vol. 27, 112-114
- **MORR et al.** *J. Food Sci.,* 1985, vol. 50, 1715-1718
- **KROLL.** *Die Nahrung,* 1991, vol. 35, 619-624